# EUROPÄISCHE PATENTSCHRIFT

(11) **EP 0 827 596 B1**
(45) Veröffentlichungstag und Bekanntmachung des Hinweises auf die Patenterteilung: **27.12.2000**
(21) Anmeldenummer: 96907324.6
(22) Anmeldetag: 01.04.1996
(51) Int. Cl.: G02B 6/44

(54) **HAUBENMUFFE**
HOOD-TYPE CONNECTOR
CONNECTEUR A CAPUCHON

(30) Priorität: 12.04.1995 DE 19513957
(43) Veröffentlichungstag der Anmeldung: 11.03.1998
(73) Patentinhaber: RXS Kabelgarnituren Gesellschaft mit beschränkter Haftung, 58093 Hagen (DE)
(72) Erfinder: FRÖHLICH, Franz-Friedrich, D-58091 Hagen (DE); KLUWE, Wolf, D-58119 Hagen (DE); MELTSCH, Hans-Jürgen, D-58239 Schwerte (DE); WINTERHOFF, Hans, D-79761 Waldshut-Tiengen (DE); ZIMMER, Rainer, D-58579 Schalksmühle (DE)
(74) Vertreter: Viering, Hans-Martin, Dipl.-Ing.
(86) Internationale Anmeldenummer: DE9600580
(87) Internationale Veröffentlichungsnummer: WO9632660

(56) Entgegenhaltungen:
- EP-A- 0 120 541
- EP-A- 0 367 477
- WO-A-93/26071
- DE-A- 4 035 557
- DE-C- 4 334 022
- US-A- 5 479 554

## Beschreibung

Die Erfindung betrifft eine Haubenmuffe aus einem Haubenkörper, einem Dichtkörper mit Kabeleinlässen in einer Abschlußplatte und einer ringförmigen Dichtungsvorrichtung zwischen dem Haubenkörper und dem Dichtkörper, wobei der Dichtkörper eine Haltevorrichtung zur mechanischen Verbindung des Haubenkörpers mit dem Dichtkörper aufweist. Eine Haubenmuffe dieser Art ist aus dem Dokument EP, A, 367 477 bekannt.

Eine Haubenmuffe dieser Art ist auch aus der deutschen Offenlegungsschrift 40 35 557 bekannt. Dort handelt es sich um einen Haubenkörper, der an seinem offenen Ende mit einem Dichtungskörper abgeschlossen wird. Dabei wird die Dichtung mit einem Dichtungssystem vorgenommen, bei dem der nötige Dichtungsdruck durch einen außen angesetzten Spannring erfolgt, der den Haubenkörper im Bereich der Dichtung außen umspannt. Dieser Spannring enthält eine trapezförmige Nut, in der die Flansche des Haubenkörpers und des Dichtungskörpers umklammert werden. Durch Zusammenziehen des Spannringes werden die beiden Teile auf einem Dichtungsring zusammengepreßt. Hier ist die gegenseitige Fixierung von Haubenkörper und Dichtungskörper mit dem Dichtungssystem zusammengefaßt.

Aus der europäischen Patentanmeldung 0 120 541 ist ebenfalls eine Haubenmuffe bekannt, bei der der Haubenkörper mit Hilfe eines Klemmringes auf den Grundkörper aufgepreßt wird, wobei zwischen dem Haubenkörper und dem Grundkörper eine ringförmige Dichtung eingesetzt ist. Der Klemmring besitzt Eingriffelemente, die in korrespondierende Gegenelemente des Grundkörpers eingreifen. Dieser Verschluß ist im wesentlichen nach den Prinzipien eines Bajonettverschlusses ausgebildet ausgebildet und der nötige Dichtungsdruck wird durch Verdrehen des Klemmringes erzeugt.

Für vorliegende Erfindung stellt sich die Aufgabe, eine Haubenmuffe zu schaffen, deren Verschluß zunächst kraftlos und getrennt vom Dichtungssystem erfolgt, wobei sie insbesondere bei Verbindungen von optischen Kabeln verwendbar sein soll, so daß die Forderungen bezüglich der Abfangung der optischen Kabel und der Führung von Lichtwellenleiter-Bündeln innerhalb der Haubenmuffe zu berücksichtigen sind.

Die gestellte Aufgabe wird gemäß der Erfindung mit einer Haubenmuffe der eingangs erläuterten Art dadurch gelöst, daß der Dichtkörper aus einer Druckplatte und einer Abschlußplatte besteht, die übereinander liegend angeordnet sind, daß die Abschlußplatte Funktionselemente für die Haltevorrichtung zwischen Haubenkörper und Dichtkörper aufweist, daß die Dichtungsvorrichtung aus einer in der Breite variierbaren, am Umfang umlaufenden Dichtungsnut und einem Dichtring aus einem Elastomer besteht, daß die Dichtnut durch umlaufende und ineinandergreifende Profile der Druckplatte und der Abschlußplatte gebildet ist, wobei die Druckplatte und die Abschlußplatte durch mindestens ein Funktionselement für die Dichtung relativ zueinander so bewegbar sind, daß die Breite der Dichtnut geringer wird und der Dichtring durch Verformung gegen die Innenwand des Haubenkörpers dichtend preßbar ist, daß der Haubenkörper zur Abschlußplatte korrespondierende Funktionselemente für die Haltevorrichtung aufweist, daß Kabeleinlässe mit jeweils einer Preßdichtung und einem Abfangsystem für Kabelmantel und Zentralelement eines Lichtwellenleiter-Kabels versehen sind, daß ein Kassettenträger für Lichtwellenleiter-Kassetten in den Innenraum der Haubenmuffe ragend mit Halteelementen am Dichtkörper angeordnet ist, daß zwischen dem Dichtkörper und dem Kassettenträger ein Freiraum für die Aufteilung von Lichtwellenleiter-Bündeln vorgesehen ist, daß mehrere Vorratskammern zur Aufnahme von Überlängen der Lichtwellenleiter-Aderbündel am Kassettenträger angeordnet sind.

Bei der erfindungsgemäßen Haubenmuffe sind Vorteile besonders darin zu sehen, daß der Haubenkörper nach der Montage der inneren Einbauten mit einem Dichtkörper zunächst kraftlos zusammengefügt wird, so daß die Dichtvorrichtung unabhängig davon bedient werden kann, daß die eingeführten Kabel, insbesondere optische Kabel, direkt an den Kabeleinlässen mit ihren Zentralelementen gefangen werden können, daß unmittelbar danach anschließend ein Freiraum vorgesehen ist, in dem die von ihren Kabelmänteln befreiten Lichtwellenleiter-Bündeladern zu entsprechend zusammengehörigen "Funktionsbündeln" bereits hier zusammengefaßt und einer vorgesehenen Vorratskammer für Überlängen zugeführt werden, von der dann die gebündelte Zuleitung zur entsprechenden Kassette erfolgt. Außerdem ist von Vorteil, daß die Kassetten in übersichtlicher Weise in einem Kassettenträger angeordnet sind, wo sie beweglich so gelagert sind, daß die erforderliche Zugänglichkeit ermöglicht wird.

Dadurch, daß die Dichtvorrichtung zwischen dem Haubenkörper und dem Dichtkörper unabhängig von der mechanischen Haltevorrichtung, zum Beispiel von einem Bajonettverschluß, zwischen den beiden Teilen erfolgt, kann die Dichtvorrichtung optimal ausgelegt werden. Sie besteht im wesentlichen aus einer in der Breite veränderbaren Dichtungsnut, in der ein weicher Dichtring aus einem Elastomer eingesetzt ist. Durch ein Funktionselement für die Dichtung, zum Beispiel ein Exzenterhebel oder in Form von Preßschrauben, wird die Nutbreite verengt, so daß der eingelagerte Dichtring infolge seiner erzwungenen Verformung gegen die Innenwand des Haubenkörpers gepreßt wird.

Die Dichtungen in den Kabeleinlässen sind als Preßdichtungen, z.B. als Kegeldichtungen ausgeführt und enthalten Dichtringe, die nach Einführung der Kabel von der Innenseite des Dichtkörpers her mit Hilfe von Preßringen dichtend eingepreßt werden. Außerdem sind hier auch die Kabelabfangungen vorgesehen, die griffige Elemente enthalten, mit denen der Kabelmantel jeweils gegen axial wirkende Kräfte gefaßt wird. Diese Kabelabfangungen beinhalten auch Abfangelemente für das jeweilige Zentralelement des eingeführten optischen Kabels. Der Vorteil dieser Anordnung liegt somit darin, daß die Kabelabdichtung und die Abfangsysteme für den Kabelmantel und das jeweilige Zentralelement zusammengefaßt sind. Dabei können auch entsprechende elektrisch leitende Anschlußmöglichkeiten vorgesehen werden, wie zum Beispiel Erdungsanschlüsse.

Ein weiterer Vorteil ist, daß der Kassettenträger für die einzelnen Kassetten direkt am Dichtkörper, vorteilhafterweise beweglich, angeordnet ist, wobei die Anordnung so gewählt ist, daß zwischen dem Dichtkörper und den im Block angeordneten Kassetten ein Freiraum gebildet ist, in dem bereits, wie oben erwähnt, die Zusammenführung der Lichtwellenleiter-Aderbündel aus verschiedenen Kabeleinführungen erfolgen kann. Dadurch ergibt sich eine funktionell geordnete Führung der einzelnen zusammengehörigen Lichtwellenleiter-Bündel, so daß bei späteren Servicearbeiten an der Muffe durch die gute Übersichtlichkeit in der Bündeladerführung ein einfaches übersichtliches Arbeiten gewährleistet ist. Die Übersichtlichkeit ist weiterhin auch noch dahingehend unterstützt, daß mehrere Vorratskammern für Lichtwellenleiter-Bündel vorgesehen sind, so daß sich auch hier in der entsprechenden Zusammenführung eine weitere Gruppenordnung erzielen läßt. Für durchgehende, derzeit nicht zu spleißende Lichtwellenleiter-Aderbündel und für eventuelle Reservebündel ist zum Beispiel eine eigene Vorratskammer vorgesehen, die zweckmäßigerweise hinter den Kassetten angeordnet ist, so daß sie bei normalen Servicearbeiten nicht behindern.

Die Erfindung wird nun anhand von 17 Figuren näher erläutert.
- Figur 1: zeigt die Bündelführung von Lichtwellenleiteradern innerhalb der Haubenmuffe.
- Figur 2: zeigt die Anordnung nach Figur 1 von innen gesehen.
- Figur 3: zeigt die Anordnung nach Figur 1 und 2 in Seitenansicht.
- Figur 4: zeigt den Dichtkörper in Einzelteilen.
- Figur 5: zeigt den Dichtkörper im montierten Zustand.
- Figur 6: zeigt das Funktionselement für das Dichtsystem.
- Figur 7: zeigt den Haubenkörper.
- Figur 8: zeigt Elemente für die Abfangung.
- Figur 9: zeigt eine Steckhülse für Erdkontaktierung.
- Figur 10: zeigt ein weiteres Ausführungsbeispiel für Abfangelemente.
- Figur 11: zeigt ein weiteres Ausführungsbeispiel für Kabelabfangung, bei der Kabelmantellappen gefaßt werden.
- Figur 12: zeigt ein weiteres Ausführungsbeispiel für eine Kabelabfangung.
- Figur 13: zeigt ein weiteres Ausführungsbeispiel für eine Kabelabfangung.
- Figur 14: zeigt den Kassettenträger.
- Figur 15: zeigt ein Ausführungsbeispiel für eine Dichtung in einem Kabeleinlaß.
- Figur 16: zeigt eine modifizierte Ausführung des Haubenkörpers.
- Figur 17: zeigt eine Ventilkappe.

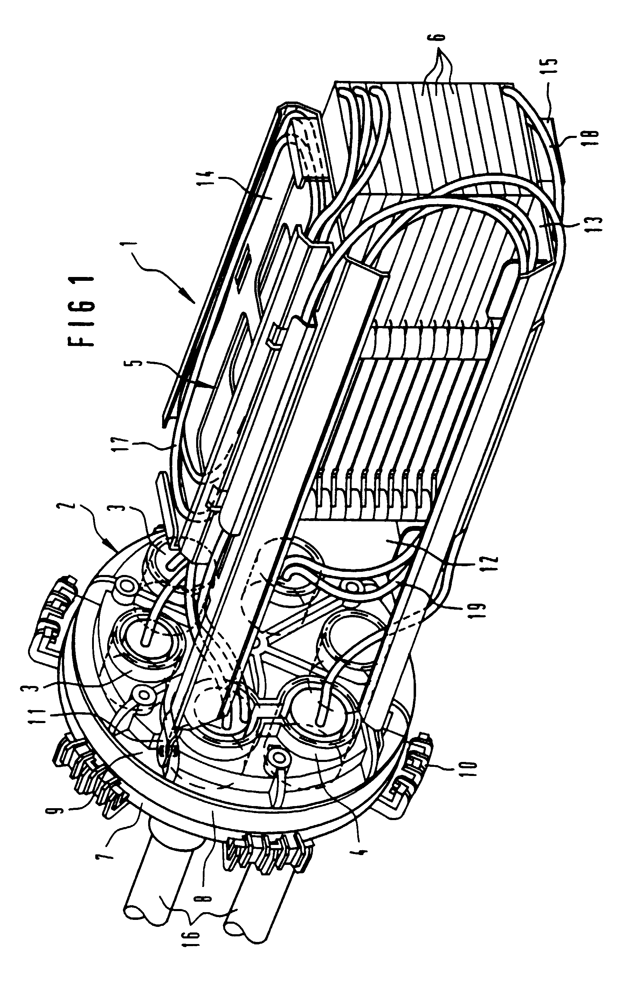

Figur 1 verdeutlicht die gesamte Anordnung der erfindungsgemäßen Haubenmuffe 1, wobei hier die Bündelführung der Lichtwellenleiteradern besonders erkennbar ist, durch die eine gute Übersichtlichkeit begründet wird. Die Haubenmuffe 1 besteht aus dem Dichtkörper 2 mit den entsprechenden Kabeleinlässen 3 für einzelne Kabeleinführungen und einem Kabeleinlaß 4 für eine doppelte Kabeleinführung, z.B. für ungeschnittene Kabel, und aus einem Kassettenhalter 5 mit den einzelnen Kassetten 6 und dem Haubenkörper, der hier abgenommen und deshalb nicht dargestellt ist.

Der Dichtkörper 2 besteht aus einer außen liegenden Abschlußplatte 7, in der die Dichtungssysteme der Kabeleinlässe 3 und 4 angeordnet sind, aus einer innen liegenden Druckplatte 9, die gegenüber der Abschlußplatte 7 in der Weise beweglich ist, daß die zwischen beiden gebildete umlaufende Dichtnut in ihrer Breite veränderbar ist und aus dem Dichtring 8, der in dieser Dichtnut angeordnet ist. Die Wirkungsweise dieses Dichtungssystems wird später näher erläutert. Die Abschlußplatte 7 weist an ihrem Umfang die Haltevorrichtungen 10 auf, mit denen der rein mechanische Zusammenhalt zwischen Haubenkörper und Dichtkörper hergestellt wird und der hier zum Beispiel als Bajonettverschluß ausgebildet ist.

Der Kassettenhalter 5 ist direkt am Dichtungskörper 2, insbesondere an der Druckplatte 9 mit Hilfe von Befestigungsele menten 11 angeordnet, wobei diese Befestigung auch schwenkbar ausgeführt sein kann. Dies hat den Vorteil, daß der Kassettenhalter 5 in eine günstige Arbeitsposition gekippt werden kann. Der Kassettenträger 5 ist außerdem mit seinen Befestigungselementen 11, zum Beispiel in Form von langgestreckten Stützen so ausgebildet, daß sich zwischen dem Dichtkörper 2 und dem Block für die Kassetten 6 ein Freiraum 12 ergibt. Innerhalb dieses Freiraumes 12 können nun die von ihren Kabelmänteln befreiten Lichtwellenleiter-Aderbündel zu entsprechend übersichtlichen "Funktionsbündeln" zusammengefaßt und weitergeleitet werden zu den vorgesehenen Vorratskammern 13, 14 bzw. 15. Dazwischen ist der Block von Kassetten 6 angeordnet, der auf diese Weise von allen Vorratskammern besonders günstig für die übersichtliche Einführung der Adernbündel zugänglich ist. Die Kassetten 6 sind relativ gegeneinander so bewegbar, daß sie aus ihrer Lage in eine Position gebracht werden können, in der alle Funktionsteile auf der Kassette 6 zugänglich sind. In diesem Fall ist eine steckbare Lagerung für die Kassetten 6 gewählt, so daß die Kassetten einzeln herausnehmbar sind. Es ist jedoch auch prinzipiell eine drehbare Lagerung der Kassetten im Kassettenhalter möglich.

Die optischen Kabel 16 werden durch die Kabeleinlässe 3 und 4 eingeführt und dort abgefangen, wobei hier auf die Darstellung der Abfangsysteme der Übersichtlichkeit wegen verzichtet ist. Im Freiraum 12 erfolgt die Zusammenstellung der "Funktionsbündel", die dann mit ihren Überlängen in die Vorratskammern eingelegt werden und zwar in die Vorratskammer 14, die Aderbündel 17 für die obere Hälfte des Kassettenblockes, in die Vorratskammer 15, die Aderbündel 18 für die untere Hälfte des Kassettenblockes und in die Vorratskammer 13 die Überlängen der durchgehenden Aderbündel und der Reservebündel 19.

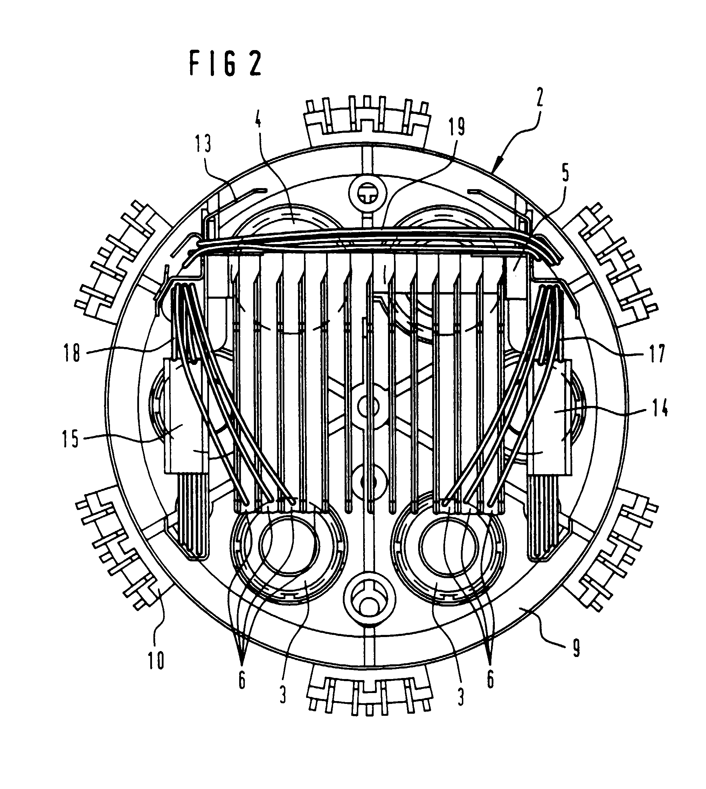

Figur 2 vermittelt die Anordnung innerhalb der Haubenmuffe 1 von oben her, das heißt auf die Rückseite des Kassettenträgers 5 gesehen, der am Dichtkörper 2 befestigt ist. Hier wird die übersichtliche Aderbündelführung besonders deutlich; denn es ergeben sich keine Kreuzungen von Aderbündeln. Die Aderbündel 17 der rechten Vorratskammer 14 werden in die Kassetten 6 der rechten Hälfte des Kassettenblockes und die Aderbündel 18 aus der linken Vorratskammer 15 werden in die Kassetten 6 der linken Hälfte des Kassettenblockes geführt, während die Überlängen der durchgehenden Aderbündel und Reservebündel 19 in der oberen Vorratskammer 13 verbleiben bzw. nach Ablegung der Überlängen zu den Kabeleinlässen zurückgeführt werden. Die Vorratskammern 13, 14, 15 sind beispielsweise als winkelig gestaltete Biege-, Präge- oder Spritzteile gestaltet und verhindern mit abgewinkelten Überständen an den Wänden das Ausgleiten von Lichtwellenleiter-Aderbündeln.

Im übrigen ist der Blick auf die Druckplatte 9 gegeben, durch die die Kabeleinlässe 3 und 4 hindurchgehen.

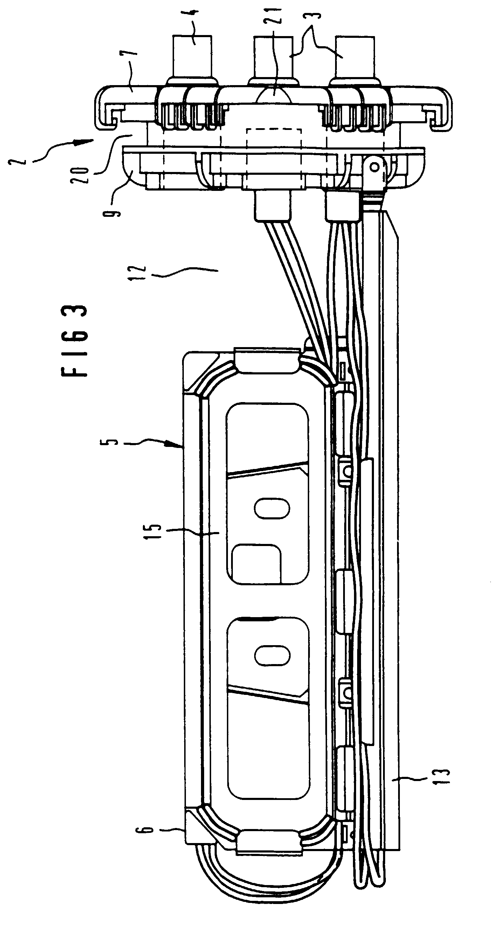

Die Figur 3 vermittelt nun eine Ansicht der Haubenmuffe 1 von der Seite bei abgenommenem Haubenkörper. Daraus läßt sich erkennen, daß die Kabeleinlässe 3 und 4 nach außen als Stutzen ausgebildet sind, die im Anlieferungszustand zum Beispiel geschlossen sind und erst bei Bedarf aufgeschnitten werden, so daß nicht benötigte Kabeleinlässe geschlossen bleiben. Diese Stutzen dienen gleichzeitig als Knickschutz für die eingeführten Kabel und halten außerdem Schwingungen von den Kabeleinführungsdichtungen ab. Der Dichtkörper 2 enthält bei diesem Ausführungsbeispiel noch eine zentrale Öffnung 21, durch die mit einer entsprechenden Dichtung das Funktionselement für die Dichtung, zum Beispiel ein Exzenterhebel, geführt wird. Bei Betätigung dieses Funktionselementes wird die zwischen der Abdeckplatte 7 und der Druckplatte 9 gebildete variable Dichtnut 20 dadurch verengt, daß die Druckplatte 9 durch das Funktionselement für die Dichtung an die Abdeckplatte 7 herangezogen wird. Dabei wird der hier nicht gezeichnete Dichtring verformt und gegen die Innenwandung des hier nicht gezeigten Haubenkörpers dichtend gepreßt.

Zwischen dem Dichtkörper 2 und dem Kassettenhalter 5 befindet sich der Freiraum 12, der zur Aufnahme der Bündelverteilung bzw. Bündelzusammenfassung und der hier nicht gezeigten Kabelabfangungen, die sich an die Kabeleinlässe anschließen, dient. Auch wird deutlich, daß durch die Maßnahme der Bündelführung in funktionellen Gruppen eine gute Übersichtlichkeit gewährleistet wird. Außerdem ist der Verlauf der Überlängen von den Lichtwellenleiter-Bündeln innerhalb der Vorratskammer 15 erkennbar, die am rückseitigen Ende zu den Kassetten 6 geführt werden.

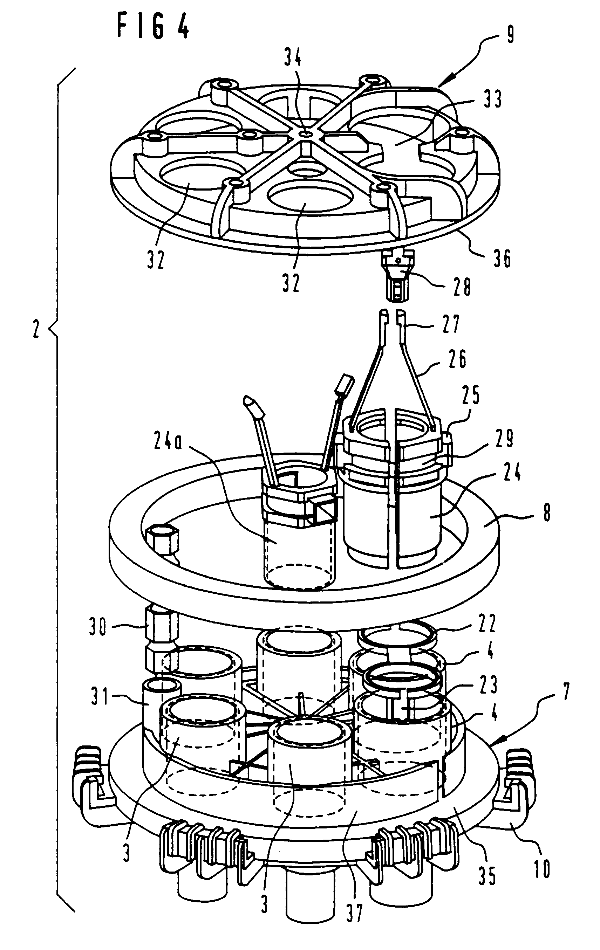

Aus Figur 4 geht der Aufbau des Dichtkörpers 2 hervor, der im wesentlichen aus der Abschlußplatte 7, dem Dichtring 8 und der Druckplatte 9 besteht, wobei hier alle Einzelteile im nichtmontierten Zustand dargestellt sind. Die Abschlußplatte 7 besitzt am Rand die Funktionselemente 10 für die mechanische Haltevorrichtung zum Haubenkörper, wobei hier ein Bajonettverschluß mit Anschlägen als Sicherung gegen Überdrehen gewählt ist. Doch könnten an dieser Stelle auch andere an sich bekannte Verschlußmechanismen angesetzt werden. Der umlaufende Innenrand 35 der Abschlußplatte 7 dient zusammen mit einem ringförmigen Profil 37 als Seitenwand und Nutgrund für die variierbare Dichtungsnut, deren zweite Seitenwand von dem Innenrand 36 der Druckplatte 9 gebildet wird. Dazwischen liegt dann als Dichtung der Dichtring 8 aus einem weichen Elastomer mit einer Härte > 10% shore. Bei diesem Ausführungsbeispiel dient als Funktionselement für die Dichtung ein Exzenterhebel, der in einer Mittelbohrung 34 eingesetzt wird und durch eine hier nicht sichtbare Bohrung durch die Abschlußplatte 7 nach außen geführt wird. Wenn dieses Funktionselement in Aktion gesetzt wird, zieht sich die Druckplatte 9 gegen die Abschlußplatte 7, die variierbare Dichtungsnut wird schmäler, der Dichtring 8 verformt sich und wird dadurch gegen die Innenwandung des Haubenkörpers dichtend gepreßt.

In der Abschlußplatte 7 sind die Kabeleinlässe 3 und 4 eingebracht, die nach auswärts als Stutzen verlängert sind. In die normalen Kabeleinlässe 3 werden Kabel eingeführt, die in der Haubenmuffe enden bzw. gespleißt werden. Durchgehende und daher nicht geschnittene Kabel oder auch nur einzelne durchgehende Adern bzw. Bündel eines Kabels werden durch den doppelten Kabeleinlaß 4 eingeführt, bei dem zwei zylindrische Bohrungen durch einen offenen Verbindungssteg 23 miteinander verbunden sind. Auf diese Weise kann das Kabel ungeschnitten durch die beiden zylindrischen Bohrungen und den offenen Verbindungssteg 23 eingeführt werden. Die Abdichtung der Kabeleinlässe 3 und 4 erfolgt mit Preßdichtungen, die aus elastomeren Dichtringen in zylindrischer, kegeliger bzw. konischer Form und aus einem Druckstück 24 bzw. 24a, das unter Umständen auch geteilt sein kann, gebildet werden. Zur Sicherheit sind Anschläge vorgesehen, damit ein Überdrehen der als Hülsenelemente ausgebildeten Druckstücke verhindert wird. An diesen Kabeleinlässen 3 und 4 werden nun gemäß der Erfindung gleichzeitig die Abfangungen für den Kabelmantel und für das Zentralelement eines optischen Kabels vorgenommen. Bei dieser Ausführung werden zylindrische Hülsenelemente 24 bzw. 24a als Spannmittel für die Dichtungen in geschlossener oder geteilter Form verwendet, die die Kabeleinlaßdichtungen durch Eindrehen in die überstehenden Gewinde der Kabeleinlässe 3 bzw. 4 verpressen. Diese zylindrischen Hülsenelemente 24 bzw. 24a enthalten radiale Öffnungen, in die Druckstücke 25 eintauchen. Mit Hilfe von Spannbändern, die in die vorgesehenen Umlaufnuten 29 eingespannt werden, werden die Druckstücke 25 in die Oberfläche des eingeführten Kabelmantels eingepreßt, so daß sie rutschsicher gefaßt sind. An dem nach innen weisenden Rand des zylindrischen Hülsenelemen tes 24 bzw. 24a sind hier als Abfangsystem für das jeweilige Zentralelement eines optischen Kabels mindestens zwei langgestreckte Ansätze 26 angesetzt, die am Ende zusammengeführt sind, wo die Enden 27 zusammen mit einer aufsteckbaren Hülse 28 die Abfangung für das aus dem Kabel ragende Zentralelement bilden. Die steckbare Hülse 28 ist zusätzlich als elektrisch leitendes Kontaktelement ausgebildet. Bei dem gezeigten Ausführungsbeispiel sind somit die Funktionen für Pressung der Dichtung, Abfangung des Kabelmantels und Abfangung des Zentralaelementes in den als Hülsenelemente ausgebildeten Druckstücken 24 bzw. 24a zusammengefaßt.

In der Abschlußplatte 7 ist weiterhin eine Öffnung 31 für eine Erdpotentialdurchführung 30 vorgesehen. Für all diese Einführungen sind in der Druckplatte 9 an den entsprechenden Stellen Öffnungen 32 bzw. 33 vorgesehen, durch die die eingeführten Elemente ungehindert hindurchgeführt werden können, so daß die Druckplatte 9 ohne Behinderung zum Spannen der Ringdichtung bewegbar ist.

Weiterhin ist dargestellt, daß die Doppeldichtung im Kabeleinlaß 4 und dem Verbindungssteg ein Druckstück 22 enthält, mit dem die Doppeldichtung niedergedrückt wird. Dies erfolgt mit zwei Hülsenelementen 24 bzw. 24a.

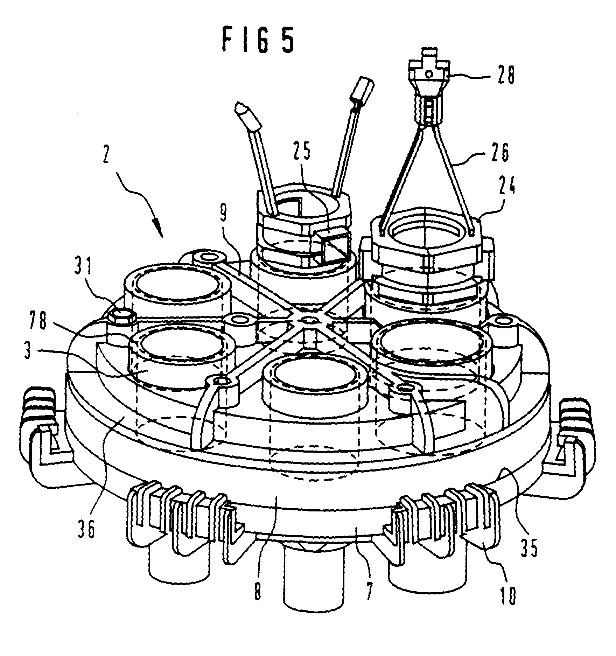

In Figur 5 ist der Dichtkörper 2 im montierten Zustand dargestellt, wobei hier besonders die Gestaltung des Dichtungssystems aus den beiden Rändern 35 und 36 der Abschlußplatte 7 und der Druckplatte 9 und dem dazwischen liegenden Dichtring 8 zu sehen ist. Hier wird auch der Einsatz der Abfangsysteme für die Kabelmäntel und die Zentralelemente in den Kabeleinlässen 3 und 4 mit den einpreßbaren Druckstücken 25 deutlich. In den restlichen Kabeleinlässen sind Nuten 78 für eine Verdrehsicherung der Hülsenelemente 24 u. 24a erkennbar.

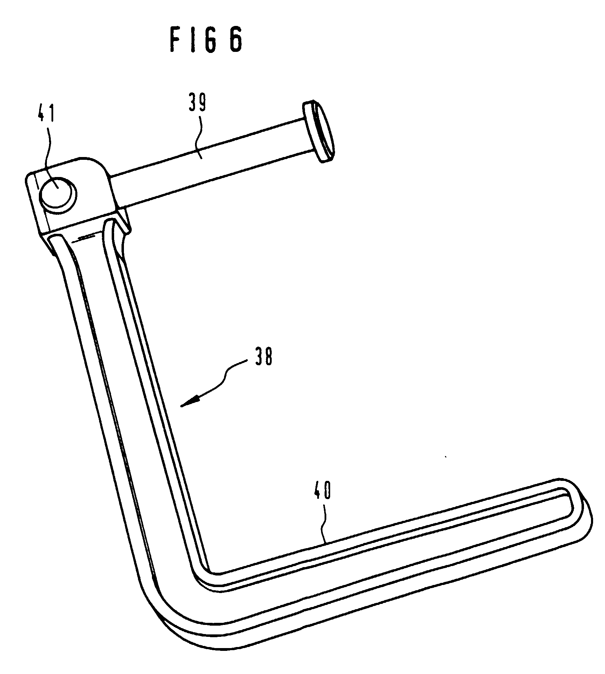

Die Figur 6 zeigt ein Funktionselement für die Dichtung, der in diesem Fall als Exzenterhebel 38 ausgebildet ist. Die Betätigung der Druckplatte erfolgt dabei durch den axial in die Haubenmuffe durch die Abschlußplatte hindurchragenden Stift 39, der in die Bohrung 34 (siehe Figur 4) der Druckplatte 7 eingreift. Dieser Stift 39 wird durch eine elastische Dichtung in der Abschlußplatte 7 nach außen geführt, wo sich ein Gelenk 41 mit einem Exzenter befindet. Durch Umlegen des Hebels 40 wird der Stift 39 nach außen gezogen und preßt dadurch die Druckplatte 9 gegen die Abschlußplatte 7. Der Hebel 40 wird schließlich nach dem Umlegen an dem Haubenkörper fixiert und eventuell plombiert. Die Durchführungsdichtung für den Stift 39 besteht aus einem Silikonelement, das bei Betätigung des Funktionselementes aktiviert wird. Als Funktionselemente können jedoch auch Schrauben oder ähnliche Elemente verwendet werden, die unter Umständen durch eine flexible Verlängerung betätigt werden können. Zweckmäßigerweise werden Markierungen vorgesehen, die anzeigen, ob die Muffe offen oder geschlossen ist.

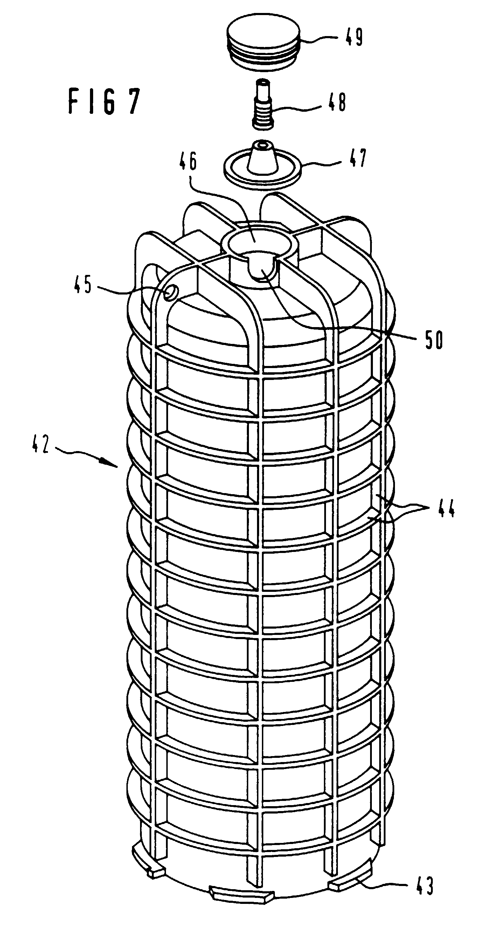

Die Figur 7 zeigt den Haubenkörper 42, der mit Hilfe der zum Dichtkörper korrespondierenden Funktionselemente für die mechanische Halterung, hier in Form von Ansätzen 43 für einen Bajonettverschluß, mit dem Dichtkörper verbunden wird. Der Haubenkörper 42 ist mit längsverlaufenden und umlaufenden Rippen 44 zur Verstärkung versehen, wobei je nach Bedarf entsprechende Halterungsmöglichkeiten in Form von Bohrungen bzw. Löchern 45, Ansätzen oder dergleichen angeordnet sind. Am oberen Ende des Haubenkörpers 42 ist eine Ventilöffnung 46 vorgesehen, in der ein Dichtungseinsatz 47 mit einem Ventil 48 und einem Abschlußdeckel 49 eingesetzt werden kann. Am Rand der Ventilöffnung ist eine Aussparung 50 angeordnet.

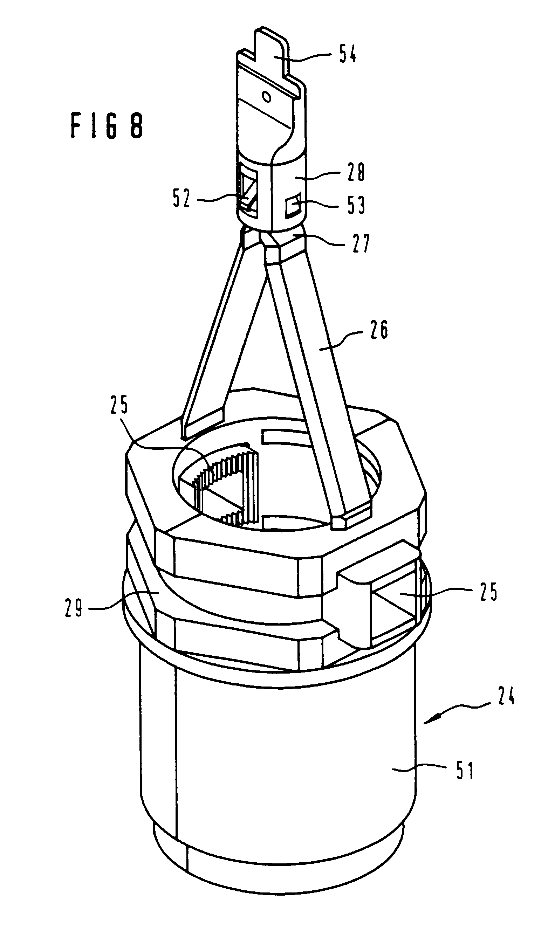

Figur 8 stellt ein Abfangsystem für den Kabelmantel und das Zentralelement eines optischen Kabels in den Einzelheiten dar. Das zylindrische Hülsenteil 24 wird mit einem Gewinde 51 in das Gewinde eines Kabeleinlasses eingeschraubt und ist damit fest an der Abschlußplatte des Dichtkörpers fixiert und verpreßt dadurch die Kabeleinlaßdichtungen. Am oberen Ende des Hülsenteils 24 ist eine umlaufende Nut 29 angeordnet, in der Druckstücke 25 durch radiale Öffnungen nach innen ragen. Nach dem Einsatz eines Kabels werden die Druckstücke 25, die zusätzlich auf den nach einwärts gerichteten Flächen scharfkantige Profilierungen aufweisen, mit Hilfe eines Spannbandes, das in die Nut 29 eingezogen wird, auf den Kabelmantel gepreßt. Damit ist der Kabelmantel fixiert. Das Zentralelement des optischen Kabels wird dagegen anschließend separat mit Hilfe von bandartigen Verlängerungen 26 abgefangen. An den Enden 27 dieser Verlängerungen 26 wird eine Abschlußhülse 28 aufgesetzt, in der das Zentralelement mit Hilfe von scharfkantigen Federelementen 52 fixiert wird. Die Abschlußhülse 28 besitzt noch Rastelemente 27 zur Fixierung auf den Enden 27 der Verlängerungen 26. Außerdem ist die Abschlußhülse 28 mit einem elektrischen Anschlußelement 54 ausgestattet.

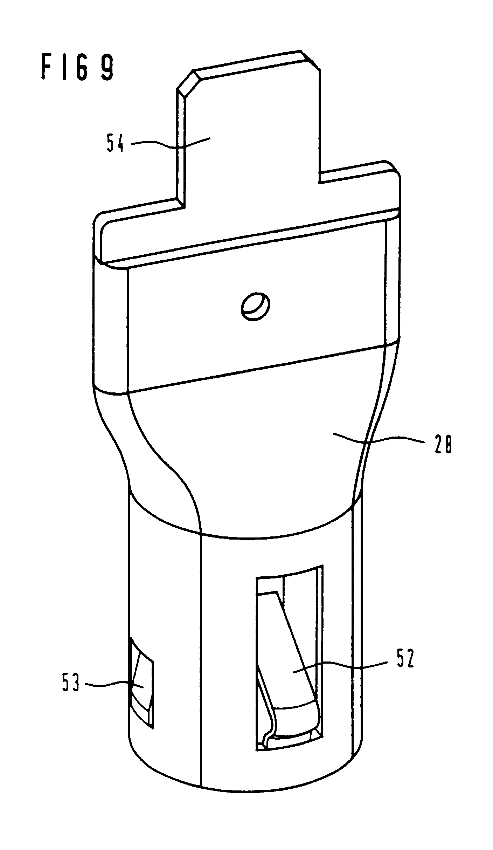

Die Figur 9 zeigt die Abschlußhülse 28 in den Einzelheiten. Hier sind besonders die als Widerhaken wirkenden Federelemente 52 für das Fassen des Zentralelementes und ein Klemmelement 53 zu erkennen. Das obere Ende ist als Steckerkontakt 54 ausgebildet. Das Zentralelement wird von unten her in die Abschlußhülse 28 eingeschoben, wo es dann gefaßt und kontaktiert wird.

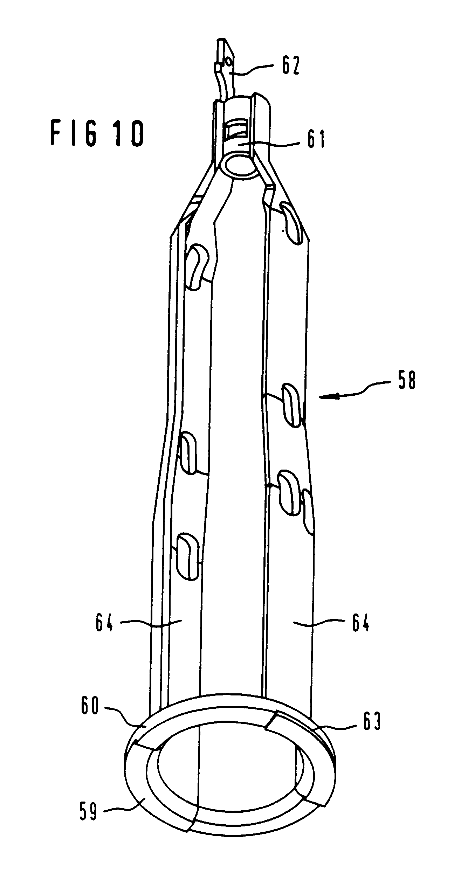

Figur 10 zeigt eine andere Version für eine Kabelabfangung. Sie besteht aus einem Ring 60, der Aussparungen 63 aufweist, in welche abgewinkelte Teilringe 59 von langgestreckten Verlängerungsstegen 64 eingreifen. Dieser zusammengesetzte Ring wird dann in einen Kabeleinlaß eingeführt und mit einem Gewindering darin in axialer Richtung fixiert. Die beiden Verlängerungsstege 64 werden dann an dem eingeführten Kabelmantel mit Spannbändern festgeklemmt, wozu auch die eingebrachten Löcher verwendet werden können. Die Verlängerungsstege 64 werden konisch zusammengeführt und mit einer Klemmhülse 61 für das Zentralelement versehen. Auch hier kann ein elektrischer Anschluß 62 vorgesehen werden. Der Ring 60 kann auch geteilt sein, so daß er auch bei der Einführung und Abfangung von ungeschnittenen Kabeln eingesetzt werden kann.

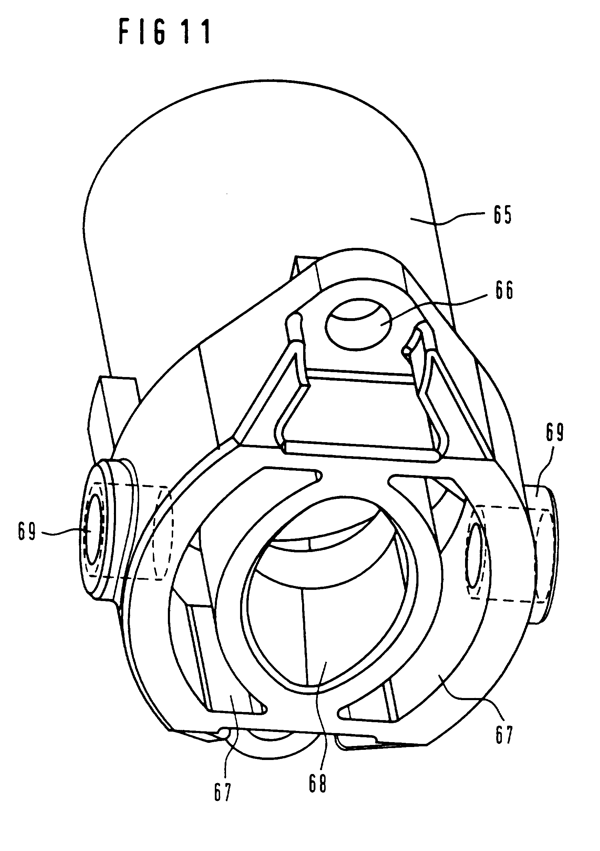

In Figur 11 wird ein Abfangsystem für einen Kabelmantel gezeigt, bei dem geschlitzte Kabelmantellappen verklemmt werden. Dieses Abfangsystem besteht aus einer Hülse 65, die entweder mit ihrem freien Ende wiederum in einen Kabeleinlaß oder mit ihren angesetzten Flanschen 66 anderweitig fixiert wird. Das andere Ende weist axial gerichtete Schlitze 67 auf, in welche längsgeschlitzte Kabelmantelsegmente eingeführt und mit Hilfe von seitlich einwirkenden Schrauben 69 fixiert werden. Die Adernbündel werden durch die Mittelöffnung 68 weitergeführt.

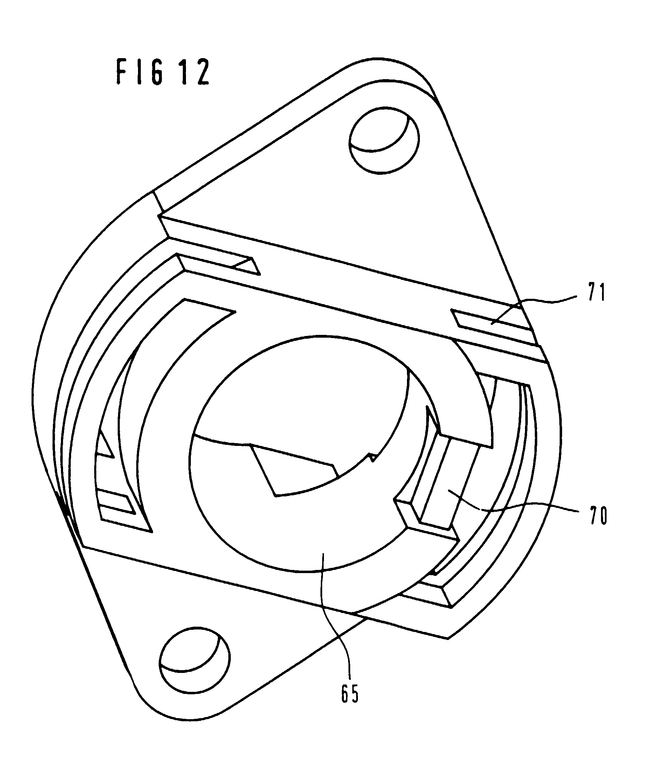

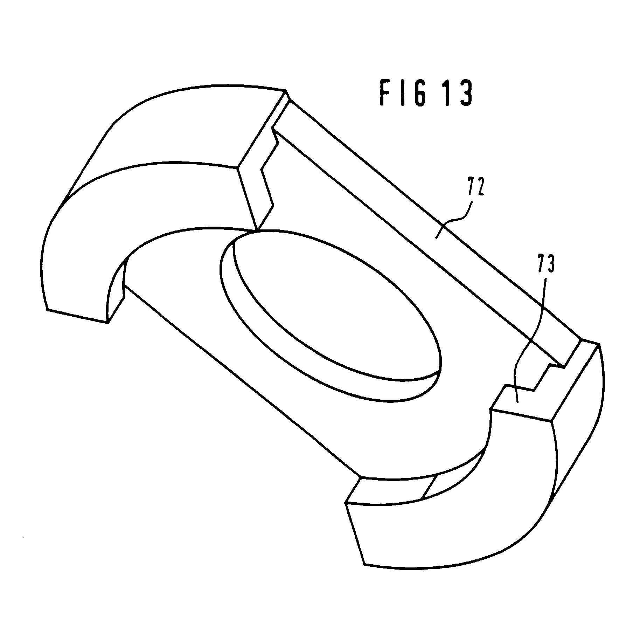

Figur 12 zeigt ein weiteres Ausführungsbeispiel einer Kabelabfangung, bei der wiederum Kabelmantelsegmente klemmend, jedoch mit einem Abschlußstück, gefaßt werden. Wie beim vorherigen Ausführungsbeispiel werden Kabelmantellappen in axial verlaufende Schlitze 67 der Hülse 65 eingeführt, wobei in diesen Schlitzen 67 zusätzliche Metall-Einsätze 70 für die Kontaktierung eines Kabelschirmes eingesetzt sind. Die Klemmung der Kabelmantelsegmente erfolgt hier mit Hilfe eines Klemmstückes 72, das seitlich in vorgesehene Schlitze 71 mit Ansätzen 73 eingreift. Dieses Klemmstück 72 ist in Figur 13 näher dargestellt und fügt sich in den Umrissen entsprechend an.

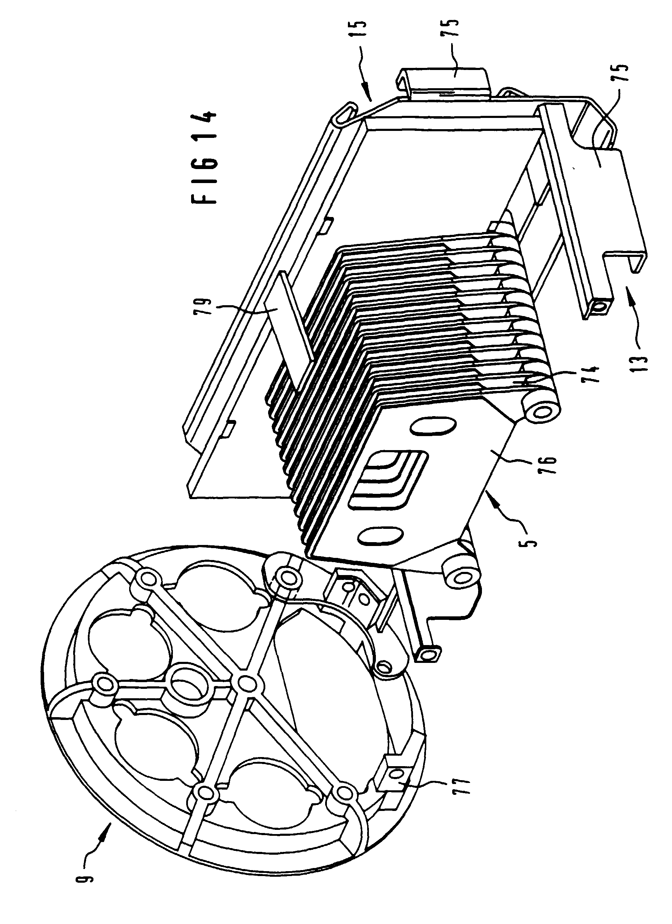

Figur 14 veranschaulicht den Aufbau eines Kassettenträgers 5, der erfindungsgemäß an entsprechenden Befestigungsflanschen 77 der Druckplatte 9 befestigt wird, wobei auch eine dreh-bzw. kippbare Anordnung gewährt werden kann. Bei dem Kassettenhalter 5 dieser Ausführung sind mit Hilfe von hintereinander in Abständen aneinandergereihten Plattenelementen 76 mehrere Fächer 74 gebildet. In diese Fächer 74 können nun die einzelnen Lichtwellenleiter- Kassetten 6 eingeführt und fixiert werden. Bei dieser Anordnung ist möglich, daß jede Kassette für Servicearbeiten einzeln entnommen werden kann, ohne daß andere Kassetten betroffen werden. Außerdem sind zwei der Vorratskammern 13 und 15 sichtbar, die aus Flächenelementen gebildet sind, deren Ränder 75 nach einwärts umgebogen sind und als Rückhalteelemente für die eingelegten Lichtwellenleiter-Bündel dienen. Selbstverständlich können auch andere Anordnungen gewählt werden, bei denen zum Beispiel die Zugänglichkeit der einzelnen Kassetten durch geeignete Kippkonstruktionen gewährleistet wird. Außerdem kann für die Kassetten eine Verriegelung 79 vorgesehen werden, die z.B. jeweils über die Hälfte des Kassettenblockes reicht. Sie ist entweder steckbar oder schwenkbar oberhalb der Kassetten angeordnet und sichert somit die Kassetten im Kassettenträger bei starken Rüttel- oder Schwingungsbeanspruchungen.

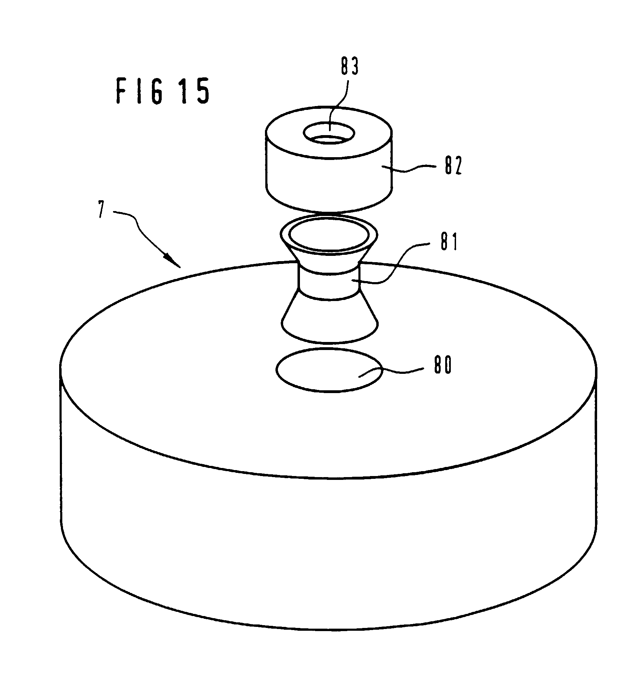

Figur 15 zeigt die Dichtung für das Funktionselement zur Betätigung der Dichtungseinheit. Der Einfachheit wegen ist nur diese Dichtungsanordnung in dieser Figur verdeutlicht. Sie besteht aus einem zylindrischen Sackloch 80 in der Abschlußplatte 7 der Haubenmuffe, das vorzugsweie zentrisch angeordnet ist, aus einem spiegelsymmetrisch doppelkonischen, schlauchartigen Dichtungsteil 81 aus elastischem Material wie z.B. Silikon und einem Deckel 82, in dem die Einführungsöffnung 83 für den Durchführungsstift 39 des in Figur 6 gezeigten Funktionselementes. Die Aktivierung der Dichtung erfolgt bei der Betätigung des Funktionselementes; denn dabei wird der Deckel 82 in das Sackloch gezogen und die Dichtung 81 wird dichtend um den durchgehenden Stift 39 verpreßt. Durch die doppelkonische Gestaltung des Dichtungsteils 81 ist es möglich, daß Ausdehnungsschwankungen des Dichtsystems ausgeglichen werden können.

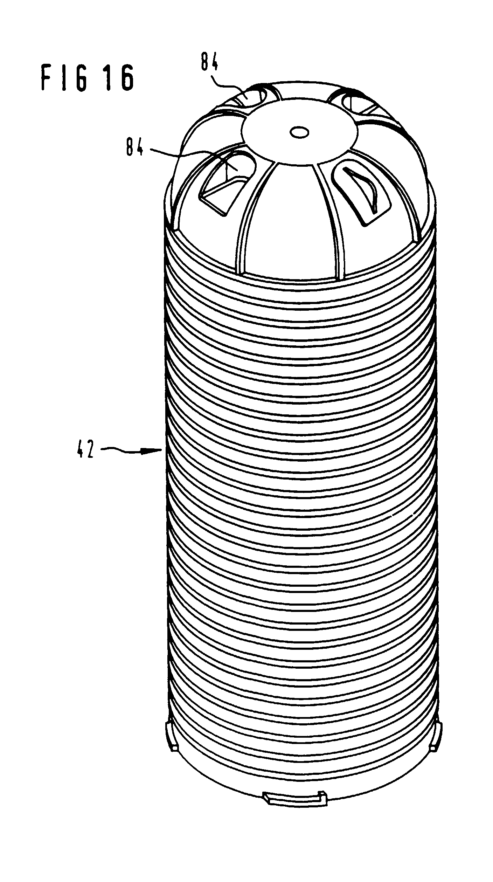

Figur 16 zeigt eine Ausführungsform des Haubenkörpers 42, bei dem z.B. vier Einbuchtungen 84 angeordnet sind. Drei davon sind zum Eingreifen der Finger gedacht, um damit den Haubenkörper 42 besser auf den Dichtkörper aufsetzen und in den Bajonettverschluß eindrehen zu können. Die vierte Einbuchtung 84 ist für ein Ventil vorgesehen, das mit einer Kappe abgedeckt werden kann.

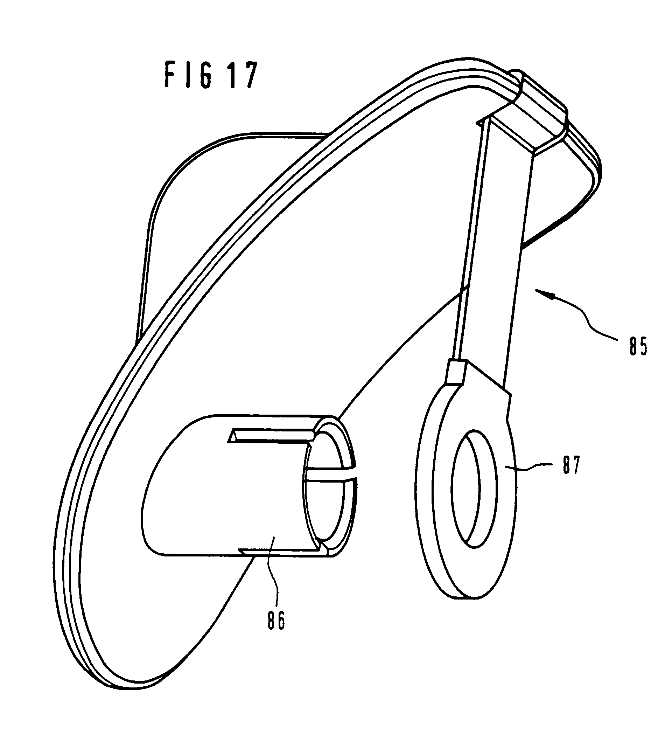

Figur 17 zeigt eine Kappe 85 für die Abdeckung einer mit einem Ventil versehenen Einbuchtung 84 des Haubenkörpers 42 (Figur 17). Diese Kappe 85 wird mit dem Hülsenteil 86 auf das Ventil aufgesteckt, wobei es mit Hilfe eines angespritzten Filmbandes 87 verlierungssicher aufgeknüpft ist.

Abschließend wird darauf verwiesen, daß die Dichtungen in den Kabeleinlässen auch aus plastischem Material bestehen können, wobei dann die kegelig ausgeführten Wandungen in den Dichtungsbereichen zylindrisch ausgeführt werden. Dadurch entsteht eine Stufe zu den nach außen ragenden Stutzen. Diese Stufe dient als Widerlager für die Verpressung des plastischen Dichtungsmaterials. Zwischen dem Dichtungsmaterial und der Stufe wird dann eine dem Kabeldurchmesser des eingeführten Kabels angepaßter Druckring eingefügt. Bei der Doppeleinführung ist dann eine entsprechend geformte Druckplatte zu verwenden.

## Patentansprüche

1. Haubenmuffe aus einem Haubenkörper, einem Dichtkörper mit Kabeleinlässen in einer Abschlußplatte und einer ringförmigen Dichtungsvorrichtung zwischen dem Haubenkörper und dem Dichtkörper, wobei der Dichtkörper eine Haltevorrichtung zur mechanischen Verbindung des Haubenkörpers mit dem Dichtkörper aufweist,
**dadurch gekennzeichnet**,
daß der Dichtkörper (2) aus einer Druckplatte (9) und besagter Abschlußplatte (7) besteht, die übereinanderliegend angeordnet sind, daß die Abschlußplatte (7) Funktionselemente (10) für die Haltevorrichtung zwischen dem Haubenkörper (42) und dem Dichtkörper (2) aufweist, daß die Dichtungsvorrichtung aus einer in der Breite variierbaren, am Umfang umlaufenden Dichtungsnut und einem Dichtring (8) aus einem Elastomer besteht, daß die Dichtungsnut durch umlaufende und ineinandergreifende Profile (35, 36, 37) der Druckplatte (9) und der Abschlußplatte (7) gebildet ist, wobei die Druckplatte (9) und die Abschlußplatte (7) durch mindestens ein Funktionselement (38) für die Dichtung relativ zueinander so bewegbar sind, daß die Breite der Dichtungsnut geringer wird und der Dichtring (8) durch Verformung gegen die Innenwand des Haubenkörpers (42) dichtend preßbar ist, daß der Haubenkörper (42) an seiner offenen Seite zur Abschlußplatte korrespondierende Funktionselemente (43) für die Haltevorrichtung aufweist, daß Kabeleinlässe (3, 4) mit jeweils einer Preßdichtung und einem Abfangsystem für einen Kabelmantel und ein Zentralelement eines Lichtwellenleiterkabels versehen sind, daß ein Kassettenträger (5) für Lichtwellenleiter-Kassetten (6) in den Innenraum der Haubenmuffe (1) ragend mit Befestigungselementen (11) am Dichtkörper (2) angeordnet ist, daß zwischen dem Dichtkörper (2) und dem Kassettenträger (5) ein Freiraum (12) für die Aufteilung von Lichtwellenleiter-Aderbündeln (19) vorgesehen ist, daß mehrere Vorratskammern (13, 14, 15) zur Aufnahme von Überlängen (17, 18, 19) der Lichtwellenleiter-Aderbündel am Kassettenträger angeordnet sind.

2. Haubenmuffe nach Anspruch 1,
**dadurch gekennzeichnet**,
daß der Haubenkörper (42) versteifende Rippen (44) aufweist.

3. Haubenmuffe nach Anspruch 2,
**dadurch gekennzeichnet**,
daß der Haubenkörper (42) aus Kunststoff, vorzugsweise aus Polypropylen mit Talkumanteilen, besteht.

4. Haubenmuffe nach einem der vorhergehenden Ansprüche,
**dadurch gekennzeichnet**,
daß die Funktionselemente (10, 43) für die mechanische Haltevorrichtung zwischen Haubenkörper (42) und Dichtkörper (2) als Bajonettverschluß ausgebildet sind und vorzugsweise mindestens einen Anschlag aufweisen.

5. Haubenmuffe nach einem der vorhergehenden Ansprüche,
**dadurch gekennzeichnet**,
daß der Haubenkörper (42) eine Ventilöffnung (46) aufweist.

6. Haubenmuffe nach Anspruch 5,
**dadurch gekennzeichnet**,
daß die Ventilöffnung (46) in einer topfförmigen Vertiefung angeordnet ist, die mit einem Stopfen (49) abdeckbar ist.

7. Haubenmuffe nach Anspruch 6,
**dadurch gekennzeichnet**,
daß die topfförmige Vertiefung eine seitliche Aussparung (50) aufweist.

8. Haubenmuffe nach einem der vorhergehenden Ansprüche,
**dadurch gekennzeichnet**,
daß der Haubenkörper Ansätze und/oder Durchbrüche (45) in den Rippen aufweist.

9. Haubenmuffe nach einem der vorhergehenden Ansprüche,
**dadurch gekennzeichnet**,
daß mindestens ein Funktionselement (38) für die Dichtung von der Druckplatte (9) des Dichtkörpers (2) durch die Abschlußplatte (7) des Dichtkörpers (2) hindurchgreift und vorzugsweise zentrisch angeordnet ist.

10. Haubenmuffe nach Anspruch 9,
**dadurch gekennzeichnet**,
daß das Funktionselement eine Zentralschraube ist, mit der die Druckplatte (9) gegen die Abschlußplatte (7) gezogen wird.

11. Haubenmuffe nach Anspruch 9,
**dadurch gekennzeichnet**,
daß das Funktionselement ein Exzenterhebel (38) ist, der die Druckplatte (9) gegen die Abschlußplatte (7) zieht und vorzugsweise axial gerichtet angeordnet ist.

12. Haubenmuffe nach Anspruch 11,
**dadurch gekennzeichnet**,
daß der Exzenterhebel (38) an der Haubenmuffe verriegelbar ist.

13. Haubenmuffe nach einem der Ansprüche 9 bis 11,
**dadurch gekennzeichnet**,
daß ein flexibler Stift zur Aktivierung des Funktionselementes für die Dichtung angeordnet ist.

14. Haubenmuffe nach einem der vorhergehenden Ansprüche,
**dadurch gekennzeichnet**,
daß der Dichtungsring (8) eine Härte > 10 % nach shore aufweist.

15. Haubenmuffe nach einem der vorhergehenden Ansprüche,
**dadurch gekennzeichnet,**
daß die Druckplatte (9) aus mechanisch stabilem und vorzugsweise elektrisch leitfähigem Material, vorzugsweise aus Aluminium, besteht.

16. Haubenmuffe nach einem der vorhergehenden Ansprüche,
**dadurch gekennzeichnet**,
daß die Druckplatte (9) Anschlüsse für Erdpotential aufweist.

17. Haubenmuffe nach einem der vorhergehenden Ansprüche,
**dadurch gekennzeichnet**,
daß der Dichtkörper (2) eine Erdpotential-Durchführung (30) aufweist.

18. Haubenmuffe nach einem der vorhergehenden Ansprüche,
**dadurch gekennzeichnet**,
daß die Kabeleinlässe (3, 4) mit nach auswärts gerichteten Stutzen angeordnet sind und bei Anlieferungszustand vorzugsweise geschlossen sind.

19. Haubenmuffe nach einem der vorhergehenden Ansprüche,
**dadurch gekennzeichnet**,
daß die Kabeleinlässe (3, 4) jeweils mit einer Kegeldichtung versehen sind, bestehend jeweils aus einer kegelig ausgebildeten Bohrung, einem außen kegelig angepaßten elastischen Dichtring und einer Verschraubung (24, 24a), vorzugsweise mit Trapezgewinde.

20. Haubenmuffe nach einem der vorhergehenden Ansprüche,
**dadurch gekennzeichnet**,
daß zwei Kabeleinlässe (4) über einen Einführungsschlitz (23) miteinander verbunden sind, in die ein doppelter Dichtring mit Verbindungssteg und einem Drucksktück (22) eingesetzt ist.

21. Haubenmuffe nach Anspruch 19,
**dadurch gekennzeichnet,**
daß Anschläge für die Verschraubung vorgesehen sind.

22. Haubenmuffe nach Anspruch 18,
**dadurch gekennzeichnet**,
daß die Kabeleinlässe mit Kegeldichtungen versehen sind, die mit Verschraubungen verpreßbar sind.

23. Haubenmuffe nach einem der vorhergehenden Ansprüche,
**dadurch gekennzeichnet**,
daß die Abfangsysteme für die Kabelmäntel aus profilierten Druckstücken (25) bestehen, die an den Innenseiten der Kabeleinlässe angeordnet sind und die mittels in Nuten (29) eingespannten Druckbändern am Umfang der Kabelmäntel einpreßbar sind.

24. Haubenmuffe nach einem der Ansprüche 1 bis 22,
**dadurch gekennzeichnet**,
aus Hülsen (65) daß die Abfangsysteme für die Kabelmäntel durch Klemmelemente für geschlitzte Kabelmantelsegmente gebildet werden, die an den Innenseiten der Kabeleinlässe (3, 4)angeordnet sind.

25. Haubenmuffe nach einem der Ansprüche 1 bis 22,
**dadurch gekennzeichnet**,
daß als Abfangsysteme für die Kabelmäntel und die Zentralelemente der optischen Kabel in den Kabeleinlässen (3, 4) jeweils ein zylindrisches, vorzugsweise längsgeteiltes Hülsenteil (58) zwischen der Kegeldichtung und der Verschraubung eingesetzt ist, daß das Hülsenteil (58) mittels Druckbändern auf dem Kabelmantel preßbar ist, daß das Hülsenteil (58) mindestens einen Verlängerungssteg (64) aufweist, an der das Zentralelement eines Lichtwellenleiterkabels mit einer Klemmhülse (61) fixierbar ist.

26. Haubenmuffe nach Anspruch 25,
**dadurch gekennzeichnet**,
daß das Hülsenteil (58) aus einem vorzugsweise geteilten, Ring (60) besteht, an den Verlängerungsstege (64) angesetzt sind, an denen die Fixierung der Kabelmäntel und des Zentralelementes erfolgt.

27. Haubenmuffe nach Anspruch 23 oder 24,
**dadurch gekennzeichnet**,
daß das Abfangsystem für das Zentralelement eines Lichtwellenleiterkabels aus mindestens zwei langgestreckten Ansätzen (26) und einer endseitig angeordneten, vorzugsweise längsgeteilten Hülse (28) besteht, wobei die Ansätze (26) an der Hülse (24, 24a) des Abfangsystems für den Kabelmantel des jeweiligen Kabeleinlasses (3, 4) befestigt sind.

28. Haubenmuffe nach Anspruch 27,
**dadurch gekennzeichnet**,
daß die Hülse (28) auf die Ansätze (26) aufsteckbar ist.

29. Haubenmuffe nach einem der Ansprüche 25 bis 28,
**dadurch gekennzeichnet**,
daß die Abfangsysteme für die Zentralelemente (28) aus elektrisch leitendem Material bestehen und Kontaktierungsanschlüsse (54, 62) aufweisen.

30. Haubenmuffe nach einem der vorhergehenden Ansprüche,
**dadurch gekennzeichnet**,
daß der Kassettenträger (5) schwenkbar am Dichtkörper (2) angeordnet ist.

31. Haubenmuffe nach einem der vorhergehenden Ansprüche,
**dadurch gekennzeichnet**,
daß der Kassettenträger (5) abnehmbar ist.

32. Haubenmuffe nach einem der vorhergehenden Ansprüche,
**dadurch gekennzeichnet**,
daß der Kassettenträger (5) geteilt ist und daß mindestens ein abgeteilter Kassettenträger schwenkbar angeordnet ist.

33. Haubenmuffe nach einem der vorhergehenden Ansprüche,
**dadurch gekennzeichnet**,
daß der Kassettenträger (5) seitlich jeweils eine Vorratskammer (14, 15) für Überlängen von zu spleißenden Aderbündeln (17, 18) und eine in der Mitte angeordnete Vorratskammer (13) für Überlängen von durchgehenden Aderbündeln von Reservebündeln (19) aufweist.

34. Haubenmuffe nach einem der vorhergehenden Ansprüche,
**dadurch gekennzeichnet**,
daß die einzelnen Kassetten (6) in ihrer Position so bewegbar sind, daß der Zugriff zu den Bauteilen der Kassette (6) gewährleistet ist.

35. Haubenmuffe nach Anspruch 34,
**dadurch gekennzeichnet**,
daß die einzelnen Kassetten (6) verschiebbar angeordnet sind.

36. Haubenmuffe nach Anspruch 34,
**dadurch gekennzeichnet**,
daß die einzelnen Kassetten (6) um einen Drehpunkt schwenkbar im Kassettenträger (5) angeordnet sind.

37. Haubenmuffe nach einem der vorhergehenden Ansprüche,
**dadurch gekennzeichnet**,
daß die im Freiraum (12) freigelegten Lichtwellenleiter-Adern zu zusammengehörigen Aderbündeln in Aderbündeln zum Eintrittspunkt einer der seitlichen Vorratskammern (14, 15) bzw. der mittleren Vorratskammer (13) zusammengefaßt sind, dort in Überlänge (17, 18,19) abgelegt und der entsprechenden Kassette (6) zugeführt sind.

38. Haubenmuffe nach Anspruch 37,
**dadurch gekennzeichnet**,
daß die einzelnen Aderbündel mit Kabelbindern, Klemmen oder spiralförmigen Elementen zusammengehalten sind.

## Claims

1. Cover sleeve comprising a cover member, a sealing member having cable inlets in a closure plate and an annular sealing device between the cover member and the sealing member, the sealing member having a fixing device for the mechanical connection of the cover member to the sealing member, characterised in that the sealing member (2) comprises a pressing plate (9) and the closure plate (7) which are arranged on top of each other, in that the closure plate (7) has function elements (10) for the fixing device between the cover member (42) and the sealing member (2), in that the sealing device comprises a sealing slot, which is of variable width and which runs around the periphery, and a sealing ring (8) of an elastomer material, in that the sealing slot is formed by peripheral profile sections (35, 36, 37), which engage in each other, of the pressing plate (9) and the closure plate (7), the pressing plate (9) and the closure plate (7) being movable relative to each other by at least one function element (38) for the seal in such a manner that the width of the sealing slot becomes smaller and the sealing ring (8) can be pressed against the inner wall of the cover member (42) in a sealing manner by means of deformation, in that the cover member (42) has, at the side that is open towards the closure plate, corresponding function elements (43) for the fixing device, in that cable inlets (3, 4) are each provided with a pressing seal and a retention system for a cable sheath and a central element of a light wave guide cable, in that a cartridge carrier (5) for light wave guide cartridges (6) is arranged projecting inside the cover sleeve (1) with elements (11) for fixing to the sealing member (2), in that a cavity (12) is provided between the sealing member (2) and the cartridge carrier (5) for the separation of light wave guide strand bundles (19), in that several storage chambers (13, 14, 15) for receiving excessive lengths (17, 18, 19) of the light wave guide strand bundles are arranged on the cartridge carrier.

2. Cover sleeve according to claim 1, characterised in that the cover member (42) has reinforcing ribs (44).

3. Cover sleeve according to claim 2, characterised in that the cover member (42) is of a plastics material, preferably of polypropylene with talcum content.

4. Cover sleeve according to any one of the preceding claims, characterised in that the function elements (10, 43) for the device which mechanically fixes the cover member (42) to the sealing member (2) are in the form of a bayonet closure and preferably have at least one stop.

5. Cover sleeve according to any one of the preceding claims, characterised in that the cover member (42) has a valve opening (46).

6. Cover sleeve according to claim 5, characterised in that the valve opening (46) is arranged in a pot-shaped indentation which can be covered with a plug (49).

7. Cover sleeve according to claim 6, characterised in that the pot-shaped indentation has a lateral recess (50).

8. Cover sleeve according to any one of the preceding claims, characterised in that the cover member has projections and/or openings (45) in the ribs.

9. Cover sleeve according to any one of the preceding claims, characterised in that at least one function element (38) for sealing the pressing plate (9) of the sealing member (2) engages through the closure plate (7) of the sealing member (2) and is preferably arranged centrally.

10. Cover sleeve according to claim 9, characterised in that the function element is a central screw, with which the pressing plate (9) is drawn against the closure plate (7).

11. Cover sleeve according to claim 9, characterised in that the function element is an eccentric lever (38) which draws the pressing plate (9) against the closure plate (7) and is preferably arranged in axial alignment.

12. Cover sleeve according to claim 11, characterised in that the eccentric lever (38) can be locked against the cover sleeve.

13. Cover sleeve according to any one of claims 9 to 11, characterised in that a flexible pin is provided for activating the function element for the seal.

14. Cover sleeve according to any one of the preceding claims, characterised in that the sealing ring (8) has a hardness greater than 10% according to the Shore scale.

15. Cover sleeve according to any one of the preceding claims, characterised in that the pressing plate (9) is composed of a mechanically stable and preferably electrically conductive material, preferably aluminium.

16. Cover sleeve according to any one of the preceding claims, characterised in that the pressing plate (9) has connections for earth potential.

17. Cover sleeve according to any one of the preceding claims, characterised in that the sealing member (2) has an earth potential duct (30).

18. Cover sleeve according to any one of the preceding claims, characterised in that the cable inlets (3, 4) are arranged with outwardly directed connection pieces and are preferably closed in the delivered state.

19. Cover sleeve according to any one of the preceding claims, characterised in that the cable inlets (3, 4) are each provided with a conical seal, each comprising a conical drilled hole, a resilient sealing ring whose exterior is adapted conically and a screw fitting (24, 24a), preferably having a trapezoid thread.

20. Cover sleeve according to any one of the preceding claims, characterised in that two cable inlets (4) are connected to each other via an inlet slot (23), into which arrangement a double sealing ring having a connecting web and a pressing element (22) is inserted.

21. Cover sleeve according to claim 19, characterised in that stops are provided for the screw fitting.

22. Cover sleeve according to claim 18, characterised in that the cable inlets are provided with conical seals which can be pressed with screw fittings.

23. Cover sleeve according to any one of the preceding claims, characterised in that the retention systems for the cable sheaths comprise profiled pressing elements (25) which are arranged on the inner sides of the cable inlets and which can be pressed against the periphery of the cable sheaths by means of pressing strips fixed in slots (29).

24. Cover sleeve according to any one of claims 1 to 22, characterised in that the retention systems for the cable sheaths are formed by clamping elements for slotted cable sheath segments which are arranged on the inner sides of the cable inlets (3,4).

25. Cover sleeve according to any one of claims 1 to 22, characterised in that a respective cylindrical, preferably longitudinally divided sleeve element (58) is inserted between the conical seal and the screw fitting as retention systems for the cable sheaths and the central elements of the optical cables in the cable inlets (3, 4), in that the sleeve element (58) can be pressed by means of pressing strips on the cable sheath, in that the sleeve element (58) has at least one extension web (64) on which the central element of a light wave guide cable can be fixed with a clamping sleeve (61).

26. Cover sleeve according to claim 25, characterised in that the sleeve element (58) comprises a preferably divided ring (60), to which extension webs (64) are attached, by means of which the fixing of the cable sheaths and the central element is effected.

27. Cover sleeve according to either claim 23 or claim 24, characterised in that the retention system for the central element of a light wave guide cable comprises at least two elongate projections (26) and a preferably longitudinally divided sleeve (28), arranged on the end face, the projections (26) being fixed to the sleeve (24, 24a) of the retention system for the cable sheath of the respective cable inlet (3, 4).

28. Cover sleeve according to claim 27, characterised in that the sleeve (28) can be pushed onto the projections (26).

29. Cover sleeve according to any one of claims 25 to 28, characterised in that the retention systems for the central elements (28) are composed of an electrically conductive material and have contacting connections (54, 62).

30. Cover sleeve according to any one of the preceding claims, characterised in that the cartridge carrier (5) is arranged pivotably on the sealing member (2).

31. Cover sleeve according to any one of the preceding claims, characterised in that the cartridge carrier (5) is removable.

32. Cover sleeve according to any one of the preceding claims, characterised in that the cartridge carrier (5) is divided and that at least one divided cartridge carrier is arranged pivotably.

33. Cover sleeve according to any one of the preceding claims, characterised in that the cartridge carrier (5) has at the side a storage chamber (14, 15) for excessive lengths of strand bundles (17, 18) to be spliced and a storage chamber (13), arranged at the centre, for excessive lengths of continuous strand bundles of reserve bundles (19).

34. Cover sleeve according to any one of the preceding claims, characterised in that the individual cartridges (6) are movable in the positions thereof so that access to the components of the cartridge (6) is ensured.

35. Cover sleeve according to claim 34, characterised in that the individual cartridges (6) are arranged displaceably.

36. Cover sleeve according to claim 34, characterised in that the individual cartridges (6) are arranged in the cartridge carrier (5) to pivot about a rotation point.

37. Cover sleeve according to any one of the preceding claims, characterised in that the light wave guide strands, exposed in the cavity (12), are gathered together in associated strand bundles at the point of entry of one of the lateral storage chambers (14, 15) or the central storage chamber (13), are laid down at that point in excessive lengths (17, 18, 19) and are supplied to the corresponding cartridge (6).

38. Cover sleeve according to claim 37, characterised in that the individual strand bundles are held together with cable binders, clamps or spiral-shaped elements.

## Revendications

1. Boîtier de jonction à capuchon constitué par un corps de capuchon, un corps d'étanchéité comportant des entrées pour câbles dans une plaque de fermeture, et un dispositif annulaire d'étanchéité situé entre le corps de capuchon et le corps d'étanchéité, le corps d'étanchéité comportant un dispositif de retenue servant à relier mécaniquement le corps de capuchon et le corps d'étanchéité,
caractérisé en ce
que le corps d'étanchéité (2) est formé par une plaque de pression (9) et ladite plaque de fermeture (7), qui sont disposées l'une au-dessus de l'autre, que la plaque de fermeture (7) comporte des éléments fonctionnels (10) pour le dispositif de retenue entre le corps de capuchon (42) et le corps d'étanchéité (2), que le dispositif d'étanchéité est constitué par une gorge d'étanchéité de largeur variable, qui s'étend circonférentiellement, et par une bague d'étanchéité (8) formée d'un élastomère, que la gorge d'étanchéité est formée par des profils circonférentiels (35, 36, 37), qui sont emboîtés l'un dans l'autre, de la plaque de pression (9) et de la plaque de fermeture (7), la plaque de pression (9) et la plaque de fermeture (7) étant déplaçables l'une par rapport à l'autre à l'aide d'au moins un élément fonctionnel (38) pour établir l'étanchéité de sorte que la largeur de la gorge d'étanchéité devient plus petite et que la bague d'étanchéité (8) peut être serrée de façon étanche par déformation contre la paroi intérieure du corps de capuchon (42), que le corps de capuchon (42) possède, sur son côté ouvert en direction de la plaque de fermeture, des éléments fonctionnels correspondants (43) pour le dispositif de retenue, que des entrées (3, 4) pour câbles sont pourvus chacun d'une garniture d'étanchéité à compression et d'un système de retenue pour une gaine de câble et d'un élément central d'un câble à guide d'ondes lumineuses, qu'un porte-cassettes (5) pour des cassettes (6) à guide d'ondes lumineuses est disposé sur le corps d'étanchéité (2) dans l'espace intérieur du boîtier de jonction à capuchon (1) et y fait saillie par des éléments de fixation (11), qu'un espace libre (12) pour la répartition des faisceaux (19) de conducteurs des guides d'ondes lumineuses est prévu entre le corps d'étanchéité (2) et le porte-cassettes (5), et que plusieurs chambres de réserve (13, 14, 15) servant à recevoir des surlongueurs (17, 18, 19) des faisceaux de conducteurs des guides d'ondes lumineuses sont prévues dans le porte-cassettes.

2. Boîtier de jonction à capuchon selon la revendication 1, caractérisé en ce
que le corps de capuchon (42) comporte des nervures de renforcement (44).

3. Boîtier de jonction à capuchon selon la revendication 2, caractérisé en ce
que le corps de capuchon (42) est réalisé en matière plastique, de préférence en polypropylène contenant un pourcentage de talc.

4. Boîtier de jonction à capuchon selon l'une des revendications précédentes, caractérisé en ce
que les éléments fonctionnels (10, 43) pour le dispositif de retenue mécanique pour le corps de capuchon (42) et le corps d'étanchéité (2) sont agencés sous la forme d'un système de fermeture à baïonnette et possèdent de préférence au moins une butée.

5. Boîtier de jonction à capuchon selon l'une des revendications précédentes, caractérisé en ce
que le corps de capuchon (42) possède une ouverture de soupape (46).

6. Boîtier de jonction à capuchon selon la revendication 5, caractérisé en ce
que l'ouverture de soupape (46) est disposée dans un renfoncement en forme de pot, qui peut être fermé par un bouchon (49).

7. Boîtier de jonction à capuchon selon la revendication 6, caractérisé en ce
que le renfoncement en forme de pot comporte un évidement latéral (50).

8. Boîtier de jonction à capuchon selon l'une des revendications précédentes, caractérisé en ce
que le corps de capuchon comporte des appendices saillants et/ou des passages traversants (45) formés dans les nervures.

9. Boîtier de jonction à capuchon selon l'une des revendications précédentes, caractérisé en ce
qu'au moins un élément fonctionnel (38) pour l'étanchéité de la plaque de pression (9) du corps d'étanchéité (2) traverse la plaque de fermeture (7) du corps d'étanchéité (2) et est disposé de préférence en position centrée.

10. Boîtier de jonction à capuchon selon la revendication 9, caractérisé en ce
que l'élément fonctionnel est une vis centrale, au moyen de laquelle la plaque de pression (9) est serrée contre la plaque de fermeture (7).

11. Boîtier de jonction à capuchon selon la revendication 9, caractérisé en ce
que l'élément fonctionnel est un levier d'excentrique (38), qui attire la plaque de pression (9) contre la plaque de fermeture (7) et est disposé de préférence en étant orienté axialement.

12. Boîtier de jonction à capuchon selon la revendication 11, caractérisé en ce
que le levier d'excentrique (38) peut être verrouillé sur le boîtier de jonction à capuchon.

13. Boîtier de jonction à capuchon selon l'une des revendications 9 à 11, caractérisé en ce
qu'il est prévu une tige flexible servant à activer l'élément fonctionnel pour établir l'étanchéité.

14. Boîtier de jonction à capuchon selon l'une des revendications précédentes, caractérisé en ce
que la bague d'étanchéité (8) possède une dureté Shore supérieure à 10 %.

15. Boîtier de jonction à capuchon selon l'une des revendications précédentes, caractérisé en ce
que la plaque de pression (9) est réalisée en un matériau mécaniquement stable et de préférence électriquement conducteur, de préférence en aluminium.

16. Boîtier de jonction à capuchon selon l'une des revendications précédentes, caractérisé en ce
que la plaque de pression (9) comporte des bornes pour le potentiel de terre.

17. Boîtier de jonction à capuchon selon l'une des revendications précédentes, caractérisé en ce
que le corps d'étanchéité (2) possède une traversée (30) pour le potentiel de terre.

18. Boîtier de jonction à capuchon selon l'une des revendications précédentes, caractérisé en ce
que les entrées (3, 4) pour câbles sont pourvues de tubulures dirigées vers l'extérieur et sont de préférence fermées à l'état livré.

19. Boîtier de jonction à capuchon selon l'une des revendications précédentes, caractérisé en ce
que les entrées pour câbles (3, 4) sont pourvues chacune d'un système d'étanchéité conique, constitué chacun par un perçage de forme conique, une bague d'étanchéité élastique adaptée extérieurement à la forme conique et un organe de vissage (24, 24a) pourvu de préférence d'un filetage trapézoïdal.

20. Boîtier de jonction à capuchon selon l'une des revendications précédentes, caractérisé en ce
que deux entrées (4) pour câbles, sont reliées entre elles par l'intermédiaire d'une fente d'introduction (23), dans laquelle est insérée une bague d'étanchéité double comportant une barrette de liaison et un élément de compression (22).

21. Boîtier de jonction à capuchon selon la revendication 19, caractérisé en ce
que des butées sont prévues pour l'organe de vissage.

22. Boîtier de jonction à capuchon selon la revendication 18, caractérisé en ce
que les entrées pour câbles sont équipées de garnitures d'étanchéité coniques qui peuvent être serrées au moyen d'organes de vissage.

23. Boîtier de jonction à capuchon selon l'une des revendications précédentes, caractérisé en ce
que les systèmes de retenue pour les gaines des câbles sont constitués par des éléments de serrage profilés (25), qui sont disposés sur les faces intérieures des entrées pour câbles et qui peuvent être serrés contre la périphérie des gaines de câble à l'aide de bandes de serrage qui sont insérés dans des gorges (29).

24. Boîtier de jonction à capuchon selon l'une des revendications 1 à 22, caractérisé en ce
que les systèmes de retenue pour les gaines de câble sont formés par des éléments de serrage pour sections de gaine de câble fendues, qui sont disposés sur les faces intérieures des entrées (3, 4) pour câbles.

25. Boîtier de jonction à capuchon selon l'une des revendications 1 à 22, caractérisé en ce
qu'en tant que systèmes de retenue pour les gaines de câble et pour les éléments centraux des câbles optiques, dans les entrées (3, 4) pour câbles, des éléments de douille cylindriques respectifs (58) de préférence divisés longitudinalement sont insérés entre la garniture d'étanchéité conique et l'organe de vissage, que l'élément de douille (58) peut être serré sur la gaine de câble au moyen de bandes de serrage et que l'élément de douille (58) possède au moins une barrette de prolongement (64), à laquelle l'élément central d'un câble de guide d'ondes lumineuses peut être fixé au moyen d'une douille de serrage (61).

26. Boîtier de jonction à capuchon selon la revendication 25, caractérisé en ce
que l'élément de douille (58) est formé d'une bague (60) de préférence divisée, sur laquelle sont montées des barrettes de prolongement (64), sur lesquelles s'effectue la fixation des gaines de câble et de l'élément central.

27. Boîtier de jonction à capuchon selon la revendication 23 ou 24, caractérisé en ce
que le système de retenue pour l'élément central d'un câble à guide d'ondes lumineuses est constitué par au moins deux appendices saillants allongés (26) et par une douille (28) disposée sur l'extrémité et de préférence divisée longitudinalement, les appendices saillants (26) étant fixés sur la douille (24, 24a) du système de retenue pour la gaine de câble de l'entrée respective (3, 4) pour câble.

28. Boîtier de jonction à capuchon selon la revendication 27, caractérisé en ce
que la douille (28) peut être enfichée sur les appendices saillants (26).

29. Boîtier de jonction à capuchon selon l'une des revendications 25 à 28, caractérisé en ce
que les systèmes de retenue pour les éléments centraux (28) sont réalisés en un matériau électriquement conducteur et comportent des raccords de contact (54, 62).

30. Boîtier de jonction à capuchon selon l'une des revendications précédentes, caractérisé en ce
que le porte-cassettes (5) est monté de manière à pouvoir pivoter sur le corps d'étanchéité (2).

31. Boîtier de jonction à capuchon selon l'une des revendications précédentes, caractérisé en ce que le porte-cassettes (5) est amovible.

32. Boîtier de jonction à capuchon selon l'une des revendications précédentes, caractérisé en ce
que le porte-cassettes (5) est divisé et qu'au moins un porte-cassettes séparé est monté de manière à pouvoir pivoter.

33. Boîtier de jonction à capuchon selon l'une des revendications précédentes, caractérisé en ce
que le porte-cassettes (5) comporte latéralement respectivement une chambre de réserve (14, 15) pour des surlongueurs de faisceaux de conducteurs à épisser (17, 18) et une chambre de réserve (13), disposée au centre, pour des surlongueurs de faisceaux continus de conducteurs de faisceaux de réserve (19).

34. Boîtier de jonction à capuchon selon l'une des revendications précédentes, caractérisé en ce
que les différentes cassettes (6) sont déplaçables, dans leur position, ce qui garantit l'accès aux composants de cassettes (6).

35. Boîtier de jonction à capuchon selon la revendication 34, caractérisé en ce
que les différentes cassettes (6) sont disposées de manière coulissante.

36. Boîtier de jonction à capuchon selon la revendication 34, caractérisé en ce
que les différentes cassettes (6) sont disposées dans le porte-cassettes (5) de manière à pouvoir tourner autour d'un centre de rotation.

37. Boîtier de jonction à capuchon selon l'une des revendications précédentes, caractérisé en ce
que les conducteurs de guides d'ondes lumineuses, qui sont disposés en libre accès dans l'espace libre (12), sont rassemblés en faisceaux de conducteurs avec des faisceaux de câbles associés au niveau du point d'entrée de l'une des chambres de réserve latérales (14, 15) ou de la chambre médiane de réserve (13), que leurs surlongueurs (17, 18, 19) sont rangées en cet endroit et que ces conducteurs s'étendent jusqu'à la cassette correspondante (6).

38. Boîtier de jonction à capuchon selon la revendication 37, caractérisé en ce
que les différents faisceaux de conducteurs sont maintenus assemblés par des attaches pour câbles, des pinces ou des éléments de forme spiralée.
